# EUROPEAN PATENT SPECIFICATION

(11) **EP 4 509 917 B1**
(45) Date of publication and mention of the grant of the patent: **08.07.2026**
(21) Application number: 23788271.7
(22) Date of filing: 07.04.2023
(51) Int. Cl.: H04N 9/31, G03B 21/00

(54) **PROJECTION DISPLAY DEVICE AND METHOD FOR CORRECTING DISPLAY POSITION OF PROJECTED IMAGE**
PROJEKTIONSANZEIGEVORRICHTUNG UND VERFAHREN ZUR KORREKTUR DER ANZEIGEPOSITION EINES PROJIZIERTEN BILDES
DISPOSITIF D'AFFICHAGE PAR PROJECTION ET PROCÉDÉ DE CORRECTION DE LA POSITION D'AFFICHAGE D'UNE IMAGE PROJETÉE

(30) Priority: 13.04.2022 JP 2022066040
(43) Date of publication of application: 19.02.2025
(73) Proprietor: JVCKENWOOD Corporation, Yokohama-shi, Kanagawa 2210022 (JP)
(72) Inventor: SUZUKI, Tomohiko, Yokohama-shi, Kanagawa 221-0022 (JP)
(74) Representative: Carstens, Dirk Wilhelm
(86) International application number: PCT/JP2023/014341
(87) International publication number: WO 2023/199852

(56) References cited:
- CN-A- 110 855 966
- JP-A- 2010 060 972
- JP-A- 2011 151 640
- JP-A- 2011 151 640
- JP-A- 2012 042 780
- JP-A- 2014 077 840
- JP-A- 2014 077 840
- JP-A- 2014 232 167
- US-A1- 2018 262 728

## Description

### [TECHNICAL FIELD]

The present disclosure relates to a projection display device and a method of correcting a display position of a projection image.

### [BACKGROUND ART]

A projection display device projects an image on a screen. After power of the projection display device is turned on and the projection display device starts an operation, a temperature inside the projection display device rises with the lapse of time. Then, an optical component constituting the projection display device expands due to heat, and a display position of the image projected on the screen may shift.

JP 2011-76029 A discloses a projector and control method of the same.

JP 2014 077840 A discloses an image projection device which includes: an image forming element that forms an image using light from a light source; a projection lens that projects an image formed with the image forming element; input means capable of inputting the deviation amount of the projection image; storage means for storing a state when the deviation amount of the projection image is input by the input means and the deviation amount of the projection image; and control means for correcting a position of the projection image on the basis of the deviation amount of the projection image stored in the storage means.

### [SUMMARY OF INVENTION]

A display system which is referred to as multi-screen is sometimes used, in which positions of ends of images projected by two or more projection display devices are adjusted on a screen to display images which are larger than an image projected by one projection display device. The image shift amount in which a display position of an image projected on a screen by a projection display device is shifted, varies depending on equipment of a projection display device, and may also vary depending on an installation condition of a projection display device. Further, a direction in which a display position of a projection image is shifted, varies depending on equipment or an installation condition.

Therefore, when the multi-screen image is displayed in which the positions of the ends of the two or more images projected by the two or more projection display devices are adjusted, with the lapse of time, a display position of each image may shift and the ends of the two or more images may shift. When the ends of the two or more images shift, and a multi-screen image is formed, which gives a sense of discomfort to a user, the user needs to manually adjust display positions of the images and adjust positions of the ends of the two or more images again. Such manual adjustment of the display positions of the images is complicated and improvement thereof is demanded.

In accordance with the present invention, a projection display device and a method as set forth in the appended claims is provided. In particular, an object of one or more embodiments is provide a projection display device and a method of correcting a display position of a projection image capable of automatically correcting a display position of a projection image after power of the projection display device is turned on and the projection display device starts an operation.

A first aspect of one or more embodiments provides a projection display device including: an image projection unit that projects image light obtained by modulating illumination light according to image data on a screen as a projection image; a position adjustment unit that adjusts a display position of the projection image displayed on the screen; a timing unit that times a time at or after an operation start time when power of the projection display device is turned on and the projection display device starts an operation; a temperature sensor attached to any part in the projection display device, that detects a temperature inside or outside the projection display device; a table holding unit that holds a table which associates a temperature index based on the temperature detected by the temperature sensor when the projection display device starts the operation, with an estimated elapsed time until the temperature index is reached assuming that the projection display device starts an operation at a preset room temperature; an image shift correction amount storage unit that stores an image shift correction amount which is an adjustment amount in which the position adjustment unit has adjusted the display position of the projection image, in association with an elapsed time at or after the operation start time timed by the timing unit when a user adjusts the display position of the projection image displayed on the screen using the position adjustment unit; and a controller that acquires the temperature index based on the temperature detected by the temperature sensor when the power of the projection display device is turned on and the projection display device starts the operation, that acquires the estimated elapsed time associated with the acquired temperature index by referring to the table, that reads out the elapsed time and the image shift correction amount stored in the image shift correction amount storage unit, and that controls the position adjustment unit to adjust the display position of the projection image displayed on the screen by an image shift correction amount corresponding to a correction elapsed time that is obtained by adding the acquired estimated elapsed time to an actual elapsed time at or after the operation start time timed by the timing unit.

A second aspect of one or more embodiments provides a method of correcting a display position of a projection image including: timing a time at or after an operation start time when a projection display device starts an operation, performed by a timing unit when power of the projection display device is turned on and the projection display device starts the operation; storing, in an image shift correction amount storage unit, an elapsed time at or after the operation start time timed by the timing unit when a user uses a position adjustment unit that adjusts a display position of a projection image displayed on a screen to adjust the display position of the projection image displayed on the screen, in association with an image shift correction amount which is an adjustment amount in which the position adjustment unit has adjusted the display position of the projection image; acquiring a temperature inside or outside the projection display device detected by a temperature sensor attached to any part in the projection display device when the projection display device starts the operation; referring to a table held by a table holding unit that associates a temperature index based on the temperature detected by the temperature sensor when the projection display device starts the operation, with an estimated elapsed time until the temperature index is reached assuming that the projection display device starts an operation at a preset room temperature, to acquire the estimated elapsed time associated with the acquired temperature index; reading out the elapsed time and the image shift correction amount stored in the image shift correction amount storage unit, and correcting the display position of the projection image displayed on the screen by an image shift correction amount corresponding to a correction elapsed time that is obtained by adding the acquired estimated elapsed time to an actual elapsed time at or after the operation start time timed by the timing unit.

In accordance with a projection display device and a method of correcting a display position of a projection image according to one or more embodiments, it is possible to automatically correct a display position of a projection image after power of the projection display device is turned on and the projection display device starts an operation.

### [BRIEF DESCRIPTION OF DRAWINGS]

Fig. 1 is a block diagram schematically illustrating a projection display device according to one or more embodiments.
Fig. 2 is a diagram illustrating a multi-screen image using two projection display devices.
**Fig.** 3 is a diagram illustrating a multi-screen image in which ends of two images are shifted.
Fig. 4 is a characteristic diagram illustrating an example of the relationship between an elapsed time from the start of an operation performed by a projection display device and the image shift amount.
**Fig.** 5 is a diagram illustrating a multi-screen image in which display positions of the two images with the shifted ends shown in **Fig.** 3 are corrected.
Fig. 6 is a diagram illustrating an example of the relationship between an elapsed time from the start of an operation performed by a projection display device and the image shift correction amount, which are stored in an image shift correction amount storage unit 32 shown in **Fig. 1****.**
Fig. 7 is a diagram illustrating an example of the relationship between an elapsed time from the start of an operation performed by a projection display device, and the image shift correction amount which includes the image shift correction amount that has been interpolated at elapsed times during which there are no image shift correction amounts.
**Fig.** 8 is a diagram illustrating an example of a table which is held in a table holding unit 31 shown in **Fig.** 1 and which shows the correspondence relationship between the operation start temperature and the estimated elapsed time.
Fig. 9 is a flowchart illustrating an operation performed by a projection display device according to one or more embodiments and processing performed by performing a method of correcting a display position of a projection image according to one or more embodiments.

### [DESCRIPTION OF EMBODIMENTS]

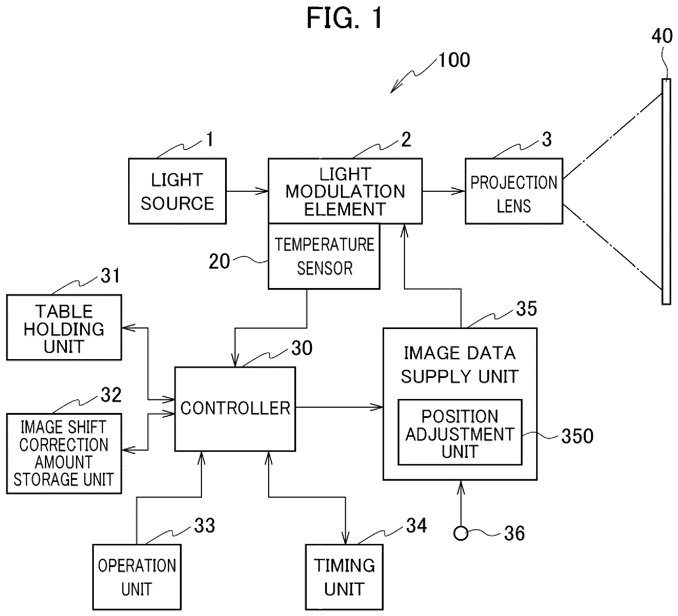

A projection display device and a method of correcting a display position of a projection image according to one or more embodiments will be described below with reference to the accompanying drawings. In Fig. 1, a projection display device 100 according to one or more embodiments includes a light source 1, an light modulation element 2, a projection lens 3, a temperature sensor 20, a controller 30, a table holding unit 31, an image shift correction amount storage unit 32, an operation unit 33, a timing unit 34, and an image data supply unit 35. The image data supply unit 35 receives, from an input terminal 36, image data supplied from an external image data supply source. The image data supply unit 35 includes a position adjustment unit 350.

The controller 30 may be constituted by a microprocessor. The table holding unit 31 may be constituted by a memory such as a ROM. The image shift correction amount storage unit 32 may be constituted by a memory such as a non-volatile memory. The table holding unit 31 and the image shift correction amount storage unit 32 may be constituted by one memory.

The light modulation element 2 modulates illumination light emitted from the light source 1 according to image data supplied from the image data supply unit 35 and generates image light. The projection lens 3 projects, on a screen 40, an image based on the image light obtained by the light modulation element 2 modulating the illumination light. The light source 1, the light modulation element 2, and the projection lens 3 constitute an image projection unit that projects image light obtained by modulating illumination light according to image data on a screen as a projection image.

A configuration of the image projection unit in the projection display device 100 is conceptually simplified. In practice, as understood from JP 2011-76029 A, the projection display device 100 has, as the light modulation element 2, a red light modulation element for modulating red illumination light, a green light modulation element for modulating green illumination light, and a blue light modulation element for modulating blue illumination light. When the light source 1 emits white light, the projection display device 100 has a separation optical system for separating the white light into red illumination light, green illumination light, and blue illumination light. The projection display device 100 has a combining optical system for combining red image light, green image light, and blue image light.

The light source 1 is not limited to a light source emitting white light, but may be a light source obtained by combining a laser diode emitting blue laser light, and a phosphor emitting yellow illumination light by being irradiated with blue laser light. The light modulation element 2 may be a reflective liquid crystal display element which is referred to as Liquid Crystal On Silicon (LCOS).

When the projection display device 100 starts an operation by a user operating the operation unit 33 to turn on power of the projection display device 100, according to control performed by the controller 30, the timing unit 34 starts timing to time a time at or after an operation start time when the projection display device 100 starts an operation. The timing unit 34 can be constituted by a counter.

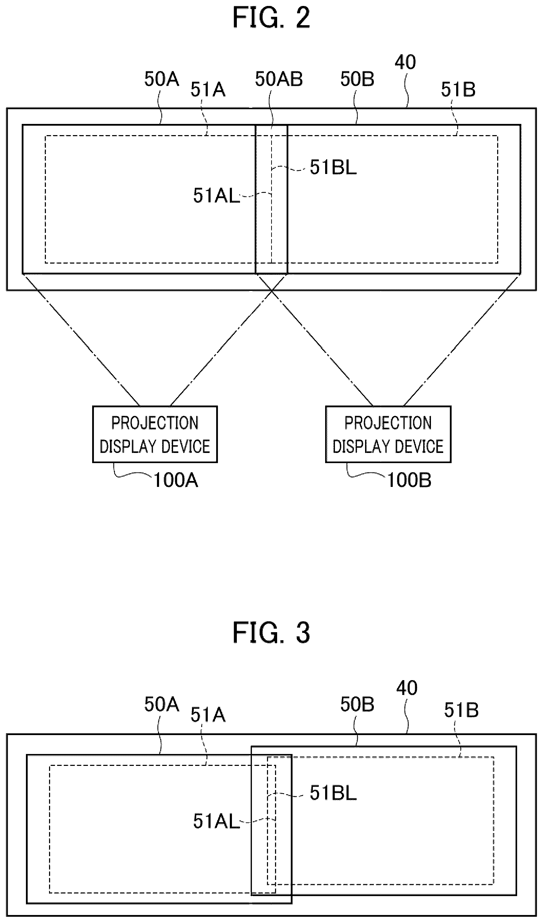

Fig. 2 shows an example in which a multi-screen image is displayed on the screen 40 using two projection display devices 100. The two projection display devices 100 are a projection display device 100A and a projection display device 100B. The projection display device 100A projects light in a projection range 50A which is on a left side of the screen 40. The projection display device 100B projects light in a projection range 50B which is on a right side of the screen 40. The projection range 50A and the projection range 50B overlap in an overlap range 50AB.

The projection display device 100A projects, on the screen 40, an image 51A which is within the projection range 50A and has a predetermined pattern smaller than the projection range 50A. The projection display device 100B projects, on the screen 40, an image 51B which is within the projection range 50B and has a predetermined pattern smaller than the projection range 50B. An area where the image 51A within the projection range 50A is located and an area where the image 51B within the projection range 50B is located are areas where substantial image light is projected. The images 51A and 51B are projection images based on image data. An area outside the image 51A within the projection range 50A and an area outside the image 51B within the projection range 50B are black images.

The position adjustment is made such that a right end portion 51AR of the image 51A and a left end portion 51BL of the image 51B come into contact with each other, and the multi-screen image is constituted by the images 51A and 51B.

It is assumed that positions of the images 51A and 51B are adjusted as shown in Fig. 2 immediately after the start of operations by the projection display devices 100A and 100B, for example. The temperature inside the projection display devices 100A and 100B rises with the lapse of time. Fig. 3 shows a state in which positions of the projection ranges 50A and 50B are shifted from original positions thereof shown in Fig. 2, and the right end portion 51AR of the image 51A and the left end portion 51BL of the image 51B are shifted. Fig. 3 shows, as an example, a case in which the projection range 50A is shifted in a lower right direction and the projection range 50B is shifted in an upper left direction.

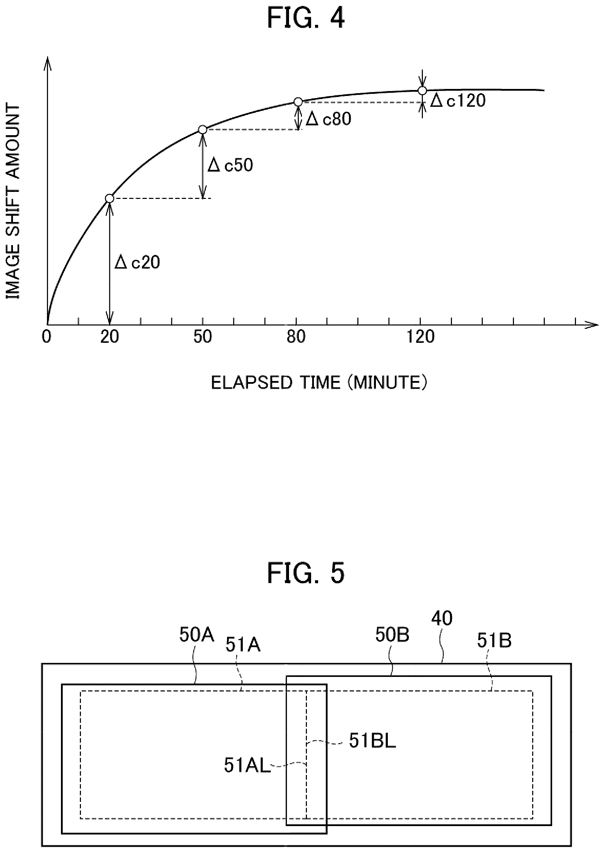

After the projection display devices 100A and 100B start operations by power thereof being turned on, if the temperature inside the devices increases with the lapse of time, display positions of the projection ranges 50A and 50B are shifted, and the image shift amount increases as shown in Fig. 4. Suppose that the temperature inside the projection display devices 100A and 100B is a room temperature of, for example, 20°C when power of the devices is turned on. In the above case, the image shift amount hardly increases and remains constant after the elapsed time exceeds 120 minutes. The room temperature may be a preset temperature such as 20°C.

A user recognizes the shift of the display positions of the images 51A and 51B, and operates the operation unit 33 in Fig. 1 so as to adjust the display positions of both the images 51A and 51B or a display position of one of the images. The controller 30 controls the position adjustment unit 350 in response to the operation through the operation unit 33 to adjust at least one of a position of the image 51A within the projection range 50A and a position of the image 51B within the projection range 50B. Then, as shown in Fig. 5, positions are adjusted such that the right end portion 51AR of the image 51A and the left end portion 51BL of the image 51B come into contact with each other.

The user may adjust at least one of the position of the image 51A within the projection range 50A and the position of the image 51B within the projection range 50B each time the user recognizes the shift of the display positions of the images 51A and 51B. That is, the user manually adjusts display positions of projection images one or more times.

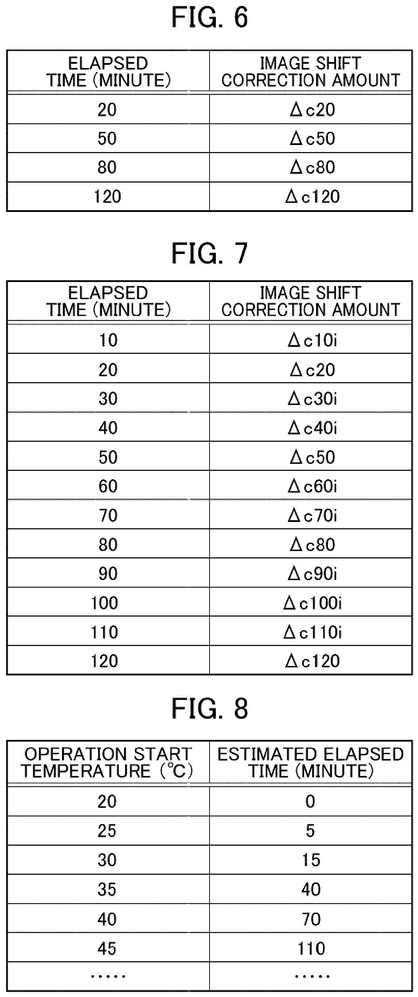

The image shift correction amount storage unit 32 stores the image shift correction amount, which is the adjustment amount in which the position adjustment unit 350 has adjusted a position of the image 51A or 51B. It is assumed that the user has corrected the image shift amounts at elapsed times of 20 minutes, 50 minutes, 80 minutes, and 120 minutes, individually as shown in **Fig. 4****.** The image shift correction amounts at each of the elapsed times are Δc20, Δc50, Δc80, and Δc120. As shown in **Fig.** 6, the image shift correction amount storage unit 32 stores the elapsed time at which the image shift amount is corrected in association with the image shift correction amount.

Strictly, the image shift correction amount stored in the image shift correction amount storage unit 32 is constituted by the image shift correction amount in a horizontal direction and the image shift correction amount in a vertical direction. It is assumed that when a position of the image 51A or 51B is corrected to the right side in the horizontal direction, the image shift correction amount is positive, when the position is corrected to the left side in the horizontal direction, the image shift correction amount is negative, when a position of the image 51A or 51B is corrected to the lower side in the vertical direction, the image shift correction amount is positive, and when the position is corrected to the upper side in the vertical direction, the image shift correction amount is negative. Therefore, the image shift correction amount stored in the image shift correction amount storage unit 32 is constituted by a positive or negative image shift correction amount in the horizontal direction, and a positive or negative image shift correction amount in the vertical direction corresponding to each elapsed time.

Suppose that the position adjustment unit 350 corrects the image shift amount at the elapsed time of 50 minutes by the image shift correction amount Δc50. In the above case, the controller 30 stores, in the image shift correction amount storage unit 32, the image shift correction amount, which is the total image shift correction amount at the elapsed time of 50 minutes (Δc20 + Δc50). Suppose that the position adjustment unit 350 corrects the image shift amount at the elapsed time of 80 minutes by the image shift correction amount Δc80. In the above case, the controller 30 stores, in the image shift correction amount storage unit 32, the image shift correction amount, which is the total image shift correction amount at the elapsed time of 80 minutes (Δc20 + Δc50 + Δc80).

Suppose that the position adjustment unit 350 corrects the image shift amount at the elapsed time of 120 minutes by the image shift correction amount Δc120. In the above case, the controller 30 stores, in the image shift correction amount storage unit 32, the image shift correction amount, which is the total image shift correction amount at the elapsed time of 120 minutes (Δc20 + Δc50 + Δc80 + Δc120).

As shown in **Fig.** 7, the controller 30 may interpolate the image shift correction amount at elapsed times during which the image shift amount is not actually corrected such as 10 minutes, 30 minutes, and 40 minutes. It is possible to assume in advance how the image shift amount will increase based on what characteristics with the lapse of time after the start of an operation by the projection display device 100. Therefore, the controller 30 can generate the interpolated image shift correction amount at elapsed times during which the image shift amount is not corrected. In Fig. 7, the image shift correction amount with "i" at the end is the interpolated image shift correction amount.

The image shift correction amount for each elapsed time shown in Figs. 6 and 7 is updated, if the user corrects the image shift amounts at one or more elapsed times when the projection display device 100 performs a next operation. The final total image shift correction amount for each operation is stored in the image shift correction amount storage unit 32, until a next operation is performed. In an example of Fig. 6, the final image shift correction amount (Δc20 + Δc50 + Δc80 + Δc120) is stored in the image shift correction amount storage unit 32 until a next operation is performed.

If the image shift correction amount storage unit 32 stores the image shift correction amount as shown in Fig. 6 or 7, the controller 30 can automatically correct a display position of an image using the image shift correction amount stored in the image shift correction amount storage unit 32. However, when the power of the projection display device 100 is turned on and the projection display device 100 starts an operation, the temperature inside the projection display device 100 may not be a room temperature. There may be a case where the projection display device 100 is operated for a predetermined time, thereafter the power of the device is turned off, and the power of the projection display device 100 is turned on again when not much time has elapsed from turning off of the power. In such a case, the temperature inside the device is higher than the room temperature.

Therefore, the projection display device 100 is configured as follows so that the device can appropriately correct a display position of a projection image even if the temperature inside the projection display device 100 when the device starts an operation is equal to the room temperature or is higher than the room temperature.

In Fig. 1, the temperature sensor 20 is attached to the light modulation element 2. It is sufficient if the temperature sensor 20 detects the temperature of any optical element inside the projection display device 100. Temperature sensors 20 may be attached to all of a red light modulation element, a green light modulation element, and a blue light modulation element, or the temperature sensor 20 may be attached to only any one of the light modulation elements. The controller 30 acquires the temperature detected by the temperature sensor 20 when the user operates the operation unit 33 to turn on the power of the projection display device 100 and the projection display device 100 starts an operation.

If temperature sensors 20 are attached to all of a red light modulation element, a green light modulation element, and a blue light modulation element, the controller 30 may acquire temperatures of the three temperature sensors 20 when the projection display device 100 starts an operation, and may acquire the average temperature obtained by averaging the three temperatures.

The table holding unit 31 holds a temperature/elapsed time conversion table which associates a plurality of operation start temperatures when the projection display device 100 starts an operation, with estimated elapsed times for each operation start temperature, as shown in Fig. 8. The operation start temperature is a first example of a temperature index based on the temperature detected by the temperature sensor 20. The estimated elapsed time indicates how much elapsed time is equivalent to the image shift amount when an operation starts at each operation start temperature, assuming that the projection display device 100 starts an operation from when the temperature is equal to the room temperature of 20°C, for example. As shown in Fig. 8, when the operation start temperature is 30°C, the estimated elapsed time is 15 minutes, and when the operation start temperature is 40°C, the estimated elapsed time is 70 minutes, for example. The temperature index may be the average temperature of operation start temperatures detected by a plurality of temperature sensors 20.

As shown in Fig. 4, the image shift amount varies depending on an elapsed time at or after an operation start time when the projection display device 100 starts an operation. When an operation start temperature is 30°C, an estimated elapsed time is substantially equivalent to an elapsed time of 15 minutes when the projection display device 100 starts an operation at the room temperature, and therefore the image shift correction amount which enables correction of the image shift amount at the elapsed time of 15 minutes is required. When an operation start temperature is 40°C, an estimated elapsed time is substantially equivalent to an elapsed time of 70 minutes when the projection display device 100 starts an operation at the room temperature, and therefore the image shift correction amount which enables correction of the image shift amount at the elapsed time of 70 minutes is required.

After acquiring a temperature when the projection display device 100 starts an operation, the controller 30 acquires an estimated elapsed time by referring to the temperature/elapsed time conversion table. After acquiring a temperature of 30°C as an operation start temperature, the controller 30 acquires an estimated elapsed time of 15 minutes, for example.

An example will be described in which the controller 30 corrects a display position of an image using the image shift correction amount shown in **Fig. 6****.** As shown in **Fig.** 6, when 20 minutes have elapsed from the start of an operation performed by the projection display device 100 at the room temperature, a display position of an image may be corrected by the image shift correction amount Δc20. Since the controller 30 has acquired the estimated elapsed time of 15 minutes, a correction elapsed time is obtained by adding the estimated elapsed time of 15 minutes to an actual elapsed time timed by the timing unit 34, and when the correction elapsed time is 20 minutes, a display position of an image should be corrected by the image shift correction amount Δc20.

The controller 30 determines whether the correction elapsed time obtained by adding the acquired estimated elapsed time to the actual elapsed time timed by the timing unit 34 has reached any one of elapsed times shown in **Fig.** 6. If the correction elapsed time has reached any one of the elapsed times, the controller 30 controls the position adjustment unit 350 so as to correct a display position of a projection image by the image shift correction amount corresponding to the one elapsed time.

Specifically, when the correction elapsed time obtained by adding the estimated elapsed time of 15 minutes to the actual elapsed time reaches 20 minutes, the controller 30 controls the position adjustment unit 350 so as to correct a display position of a projection image by the image shift correction amount Δc20. When the correction elapsed time obtained by adding the estimated elapsed time of 15 minutes to the actual elapsed time reaches 50 minutes, the controller 30 further controls the position adjustment unit 350 so as to correct a display position of an image by the image shift correction amount Δc50.

When the correction elapsed time obtained by adding the estimated elapsed time of 15 minutes to the actual elapsed time reaches 80 minutes, the controller 30 further controls the position adjustment unit 350 so as to correct a display position of an image by the image shift correction amount Δc80. When the correction elapsed time obtained by adding the estimated elapsed time of 15 minutes to the actual elapsed time reaches 120 minutes, the controller 30 further controls the position adjustment unit 350 so as to correct a display position of an image by the image shift correction amount Δc120.

Incidentally, the projection display device 100 may be configured to correct a display position of a projection image by the final total image shift correction amount stored in the image shift correction amount storage unit 32, when the unit performs a previous operation. In such a case, the controller 30 may obtain the image shift correction amount at each correction elapsed time as follows. An example will be described in which the image shift correction amount storage unit 32 stores the image shift correction amount (Δc20 + Δc50 + Δc80 + Δc120).

When the correction elapsed time obtained by adding the estimated elapsed time of 15 minutes to the actual elapsed time reaches 20 minutes, the controller 30 subtracts the image shift correction amount (Δc50 + Δc80 + Δc120) from the image shift correction amount (Δc20 + Δc50 + Δc80 + Δc120), and controls the position adjustment unit 350 so as to correct a display position of an image by the image shift correction amount Δc20. When the correction elapsed time obtained by adding the estimated elapsed time of 15 minutes to the actual elapsed time reaches 50 minutes, the controller 30 subtracts the image shift correction amount (Δc80 + Δc120) from the image shift correction amount (Δc20 + Δc50 + Δc80 + Δc120), and controls the position adjustment unit 350 so as to correct a display position of an image by the image shift correction amount (Δc20 + Δc50).

When the correction elapsed time obtained by adding the estimated elapsed time of 15 minutes to the actual elapsed time reaches 80 minutes, the controller 30 subtracts the image shift correction amount Δc120 from the image shift correction amount (Δc20 + Δc50 + Δc80 + Δc120), and controls the position adjustment unit 350 so as to correct a display position of an image by the image shift correction amount (Δc20 + Δc50 +Δc80). When the correction elapsed time obtained by adding the estimated elapsed time of 15 minutes to the actual elapsed time reaches 120 minutes, the controller 30 controls the position adjustment unit 350 so as to correct a display position of an image by the image shift correction amount (Δc20 + Δc50 + Δc80 + Δc120).

The controller 30 acquires a temperature of 35°C as an operation start temperature, and then acquires an estimated elapsed time of 40 minutes. In this case, the controller 30 determines that when an actual elapsed time is 0, a correction elapsed time obtained by adding an estimated elapsed time of 40 minutes to an actual elapsed time has reached an elapsed time of 20 minutes shown in Fig. 6. Therefore, in such a case, the controller 30 immediately controls the position adjustment unit 350 so as to correct a display position of an image by the image shift correction amount Δc20.

As described above, the position adjustment unit 350 can appropriately correct a display position of a projection image according to the control by the controller 30, regardless of a temperature inside the projection display device 100 when the device starts an operation.

The projection display device 100 may be configured as follows. In Fig. 1, in addition to the temperature sensor 20 (first temperature sensor) attached to the light modulation element 2, a temperature sensor (second temperature sensor) may be attached to an optical element or another part other than the light modulation element 2. In this case, the projection display device 100 includes two or more temperature sensors including the first temperature sensor. The second temperature sensor may be attached to the light source **1.** The second temperature sensor may be attached to any part in the projection display device 100 to detect a temperature outside the device.

The controller 30 acquires a temperature detected by the first temperature sensor and a temperature detected by the second temperature sensor, and obtains the difference between both of the temperatures. Instead of the temperature/elapsed time conversion table shown in Fig. 8, the table holding unit 31 holds a temperature difference/elapsed time conversion table that associates a plurality of operation start temperature differences of temperatures detected by the two or more temperature sensors, with estimated elapsed times until each operation start temperature difference is reached. The operation start temperature difference is a second example of a temperature index based on temperatures detected by the first and second temperature sensors.

The controller 30 acquires the operation start temperature difference when the projection display device 100 starts an operation. The controller 30 acquires an estimated elapsed time corresponding to the operation start temperature difference by referring to the temperature difference/elapsed time conversion table. The controller 30 determines whether a correction elapsed time obtained by adding the acquired estimated elapsed time to an actual elapsed time at or after an operation start time timed by the timing unit 34, reaches any one of one or more elapsed times read from the image shift correction amount storage unit 32.

If the correction elapsed time has reached any one of elapsed times, the controller 30 controls the position adjustment unit 350 so as to adjust a display position of a projection image by the image shift correction amount corresponding to the reached elapsed time.

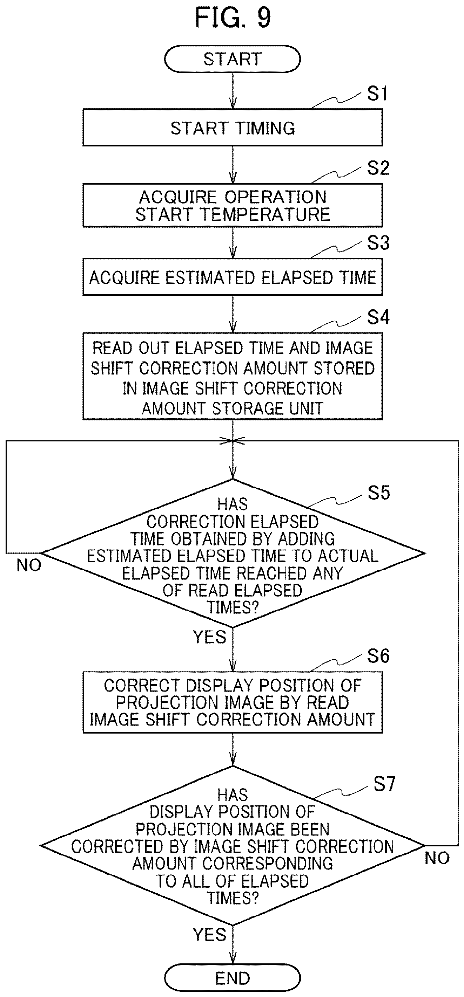

With reference to a flowchart shown in Fig. 9, a description will be given regarding an operation performed by the projection display device 100 and a method of correcting a display position of a projection image performed by the projection display device 100. Fig. 9 shows an operation when the table holding unit 31 holds the temperature/elapsed time conversion table shown in Fig. 8.

In Fig. 9, after the power of the projection display device 100 is turned on and processing starts, the timing unit 34 starts timing according to the control by the controller 30 in step S1. The controller 30 acquires an operation start temperature in step S2. The controller 30 acquires an estimated elapsed time corresponding to the operation start temperature in step S3. The controller 30 reads out elapsed times and the image shift correction amount stored in the image shift correction amount storage unit 32 in step S4.

The controller 30 determines whether a correction elapsed time obtained by adding the estimated elapsed time to an actual elapsed time, has reached any of the read elapsed times in step S5. If the correction elapsed time has not reached any one of the elapsed times (NO), the controller 30 repeats the processing in step S5. Alternatively, if the correction elapsed time has reached any one of the elapsed times (YES), the controller 30 controls the position adjustment unit 350 so as to correct a display position of a projection image by the read image shift correction amount in step S6.

Next, the controller 30 determines whether a display position of a projection image has been corrected by the image shift correction amount corresponding to all of the elapsed times in step S7. If a display position of a projection image has not been corrected by the image shift correction amount corresponding to all of the elapsed times

(NO), the controller 30 repeats the processing in steps S5 to S7. Alternatively, if a display position of a projection image has been corrected by the image shift correction amount corresponding to all of the elapsed times (YES), the controller 30 ends the processing.

The position adjustment unit 350 adjusts a display position of a projection image by adjusting a position of the projection image (image 51A or 51B) within the projection range 50A or 50B, but a position on the screen 40 of the projection range 50A or 50B may be optically adjusted. It may be configured that the projection lens 3 can move, and a position on the screen 40 of the projection range 50A or 50B can be adjusted by moving the projection lens 3, for example. In this case, it is not necessary for the images 51A and 51B to be smaller than the projection ranges 50A and 50B, respectively, the size of the images 51A and 51B may be the same as the size of the projection ranges 50A and 50B, respectively, and the entire projection ranges 50A and 50B may be a projection image having a predetermined pattern.

## Claims

1. A projection display device (100) comprising:
an image projection unit (3) configured to project image light obtained by modulating illumination light according to image data on a screen (40) as a projection image;
a position adjustment unit (350) configured to adjust a display position of the projection image displayed on the screen (40);
a timing unit (34) configured to time a time at or after an operation start time when power of the projection display device (100) is turned on and the projection display device (100) starts an operation;
a temperature sensor (20) attached to any part in the projection display device (100), configured to detect a temperature inside or outside the projection display device (100);
a table holding unit (31) configured to hold a table that associates each temperature index among a plurality of temperature indexes based on the temperature detected by the temperature sensor (20) when the projection display device (100) starts the operation, with an estimated elapsed time corresponding to each temperature index until each temperature index is reached assuming that the projection display device (100) starts an operation at a preset room temperature;
an image shift correction amount storage unit (32) configured to store a plurality of elapsed times at or after the operation start time timed by the timing unit (34) when a user uses the position adjustment unit (350) to adjust an image shift amount in which the display position of the projection image displayed on the screen (40) is shifted, in association with image shift correction amounts corresponding to the respective elapsed times which are adjustment amounts in which the image shift amounts of the projection image is adjusted; and
a controller (30) configured to acquire a temperature index based on the temperature detected by the temperature sensor (20) when the power of the projection display device (100) is turned on and the projection display device (100) starts the operation, configured to acquire an estimated elapsed time associated with the acquired temperature index by referring to the table, configured to obtain a correction elapsed time by adding the acquired estimated elapsed time to an actual elapsed time at or after the operation start time timed by the timing unit (34), configured to determine whether the correction elapsed time has reached any one of the plurality of elapsed times stored in the image shift correction amount storage unit (32), and configured to control the position adjustment unit (350) to adjust the display position of the projection image displayed on the screen (40) by the image shift correction amount corresponding to the correction elapsed time when it is determined that the correction elapsed time has reached any one of the plurality of elapsed times.

2. The projection display device (100) according to claim 1, comprising:
a first temperature sensor (20) configured to detect a temperature of any optical element inside the projection display device (100) as the temperature sensor (20), wherein
the table associates an operation start temperature detected by the first temperature sensor (20) as the temperature index, with an estimated elapsed time until the operation start temperature is reached assuming that the projection display device (100) starts the operation at the preset room temperature.

3. The projection display device (100) according to claim 1, comprising:
a plurality of temperature sensors as the temperature sensor (20), wherein
the table associates an average temperature of operation start temperatures detected by the plurality of temperature sensors as the temperature index, with an estimated elapsed time until the average temperature is reached assuming that the projection display device (100) starts the operation at the preset room temperature.

4. The projection display device (100) according to claim 1, comprising:
a first temperature sensor (20) configured to detect a temperature of any optical element inside the projection display device (100) as the temperature sensor (20); and
a second temperature sensor configured to detect a temperature of another optical element or another part as the temperature sensor (20), wherein
the table associates an operation start temperature difference, as the temperature index, which is a difference between an operation start temperature detected by the first temperature sensor (20) and an operation start temperature detected by the second temperature sensor, with an estimated elapsed time until the operation start temperature difference is reached assuming that the projection display device (100) starts the operation at the preset room temperature.

5. The projection display device (100) according to any one of claims 1 to 4, wherein
the projection image is smaller than a projection range of light projected on the screen (40) by the image projection unit (3), and
the position adjustment unit (350) adjusts the display position of the projection image by adjusting a position of the projection image within the projection range.

6. The projection display device (100) according to any one of claims 1 to 4, wherein
the image projection unit includes a movable projection lens,
a size of the projection image is the same as a size of a projection range of light projected on the screen (40) by the image projection unit (3), and
the position adjustment unit (350) adjusts the display position of the projection image by moving the projection lens.

7. The projection display device (100) according to any one of the preceding claims, wherein
the projection image of which the display position is adjusted is an image having a predetermined pattern.

8. The projection display device (100) according to any one of the preceding claims, wherein
the image shift correction amount stored in the image shift correction amount storage unit (32) is constituted by an image shift correction amount in a horizontal direction and an image shift correction amount in a vertical direction.

9. A method of correcting a display position of a projection image, the method comprising:
timing a time at or after an operation start time when a projection display device (100) starts an operation, performed by a timing unit (34) when power of the projection display device (100) is turned on and the projection display device (100) starts the operation;
storing, in an image shift correction amount storage unit (32), a plurality of elapsed times at or after the operation start time timed by the timing unit (34) when a user uses a position adjustment unit (350) that adjusts a display position of a projection image displayed on a screen (40) to adjust an image shift amount in which the display position of the projection image displayed on the screen (40) is shifted, in association with image shift correction amounts corresponding to the respective elapsed times which are adjustment amounts in which the image shift amounts of the projection image is adjusted;
acquiring a temperature inside or outside the projection display device (100) detected by a temperature sensor (20) attached to any part in the projection display device (100) when the projection display device (100) starts the operation;
referring to a table held by a table holding unit (31) that associates each temperature index among a plurality of temperature indexes based on the temperature detected by the temperature sensor (20) when the projection display device (100) starts the operation, with an estimated elapsed time corresponding to each temperature index until each temperature index is reached assuming that the projection display device (100) starts an operation at a preset room temperature, to acquire an estimated elapsed time associated with the acquired temperature index;
obtaining a correction elapsed time by adding the acquired estimated elapsed time to an actual elapsed time at or after the operation start time timed by the timing unit (34);
determining whether the correction elapsed time has reached any one of the plurality of elapsed times stored in the image shift correction amount storage unit (32); and
adjusting the display position of the projection image displayed on the screen (40) by the image shift correction amount corresponding to the correction elapsed time when it is determined that the correction elapsed time has reached any one of the plurality of elapsed times.

## Patentansprüche

1. Eine Projektionsanzeigevorrichtung (100), aufweisend:
eine Bildprojektionseinheit (3), die konfiguriert ist zum Projizieren eines Bildlichts, das durch das Modulieren eines Beleuchtungslichts gemäß Bilddaten erhalten wird, auf eine Bildfläche (40) als ein Projektionsbild,
eine Positionseinstellungseinheit (350), die konfiguriert ist zum Einstellen einer Anzeigeposition des auf der Bildfläche (40) angezeigten Projektionsbilds,
eine Timingeinheit (34), die konfiguriert ist zum Timen einer Zeit bei oder nach einer Betriebsstartzeit, zu der die Projektionsanzeigevorrichtung (100) eingeschaltet wird und die Projektionsanzeigevorrichtung (100) einen Betrieb beginnt,
einen Temperatursensor (20), der an einem Teil in der Projektionsanzeigevorrichtung (100) angebracht ist und konfiguriert ist zum Erfassen einer Temperatur innerhalb oder außerhalb der Projektionsanzeigevorrichtung (100),
eine Tabellenspeichereinheit (31), die konfiguriert ist zum Speichern einer Tabelle, die jeden Temperaturindex innerhalb einer Vielzahl von Temperaturindizes basierend auf der Temperatur, die durch den Temperatursensor (20) erfasst wird, wenn die Projektionsanzeigevorrichtung (100) den Betrieb beginnt, mit einer geschätzten abgelaufenen Zeit in Entsprechung zu jedem Temperaturindex bis zum Erreichen jedes Temperaturindex assoziiert, wobei angenommen wird, dass die Projektionsanzeigevorrichtung (100) einen Betrieb bei einer vorgegebenen Raumtemperatur beginnt,
eine Bildverschiebungskorrekturgröße-Speichereinheit (32), die konfiguriert ist zum Speichern einer Vielzahl von abgelaufenen Zeiten bei oder nach der durch die Timingeinheit (34) getimten Betriebsstartzeit, wenn ein Benutzer die Positionseinstellungseinheit (350) verwendet, um eine Bildverschiebungsgröße, mit der die Bildposition des auf der Bildfläche (40) angezeigten Projektionsbilds verschoben wird, einzustellen, in Assoziation mit Bildverschiebungskorrekturgrößen in Entsprechung zu den entsprechenden abgelaufenen Zeiten, die Einstellungsgrößen, mit denen die Bildverschiebungsgrößen des Projektionsbilds eingestellt werden, sind, und
eine Steuereinrichtung (30), die konfiguriert ist zum Erhalten eines Temperaturindex basierend auf der Temperatur, die durch den Temperatursensor (20) erfasst wird, wenn die Projektionsanzeigevorrichtung (100) eingeschaltet wird und die Projektionsanzeigevorrichtung (100) den Betrieb beginnt, konfiguriert ist zum Erhalten einer geschätzten abgelaufenen Zeit, die mit dem erhaltenen Temperaturindex assoziiert ist, durch die Bezugnahme auf die Tabelle, konfiguriert ist zum Erhalten einer korrigierten abgelaufenen Zeit durch das Addieren der erhaltenen geschätzten abgelaufenen Zeit zu einer tatsächlich abgelaufenen Zeit bei oder nach der durch die Timingeinheit (34) getimten Betriebsstartzeit, konfiguriert ist zum Bestimmen, ob die korrigierte abgelaufene Zeit eine aus der in der Bildverschiebungskorrekturgröße-Speichereinheit (32) gespeicherten Vielzahl von abgelaufenen Zeiten erreicht hat, und konfiguriert ist zum Steuern der Positionseinstellungseinheit (350) für das Einstellen der Anzeigeposition des auf der Bildfläche (40) angezeigten Projektionsbilds mit der Bildverschiebungskorrekturgröße in Entsprechung zu der korrigierten abgelaufenen Zeit, wenn bestimmt wird, dass die korrigierte abgelaufene Zeit eine aus der Vielzahl von abgelaufenen Zeiten erreicht hat.

2. Projektionsanzeigevorrichtung (100) nach Anspruch 1, die aufweist:
einen ersten Temperatursensor (20), der konfiguriert ist zum Erfassen einer Temperatur eines optischen Elements in der Projektionsanzeigevorrichtung (100), als den Temperatursensor (20), wobei:
die Tabelle eine durch den ersten Temperatursensor (20) erfasste Betriebstarttemperatur als den Temperaturindex mit einer geschätzten abgelaufenen Zeit bis zum Erreichen der Betriebsstartzeit assoziiert, wobei angenommen wird, dass die Projektionsanzeigevorrichtung (100) den Betrieb bei der vorgegebenen Raumtemperatur beginnt.

3. Projektionsanzeigevorrichtung (100) nach Anspruch 1, die aufweist:
eine Vielzahl von Temperatursensoren als den Temperatursensor (20), wobei:
die Tabelle eine durchschnittliche Temperatur von durch die Vielzahl von Temperatursensoren erfassten Betriebsstarttemperaturen als den Temperaturindex mit einer geschätzten abgelaufenen Zeit bis zum Erreichen der durchschnittlichen Temperatur assoziiert, wobei angenommen wird, dass die Projektionsanzeigevorrichtung (100) den Betrieb bei der vorgegebenen Raumtemperatur beginnt.

4. Projektionsanzeigevorrichtung (100) nach Anspruch 1, aufweisend:
einen ersten Temperatursensor (20), der konfiguriert ist zum Erfassen einer Temperatur eines optischen Elements in der Projektionsanzeigevorrichtung (100) als den Temperatursensor (20), und
einen zweiten Temperatursensor, der konfiguriert ist zum Erfassen einer Temperatur eines anderen optischen Elements oder eines anderen Teils als den Temperatursensor (20), wobei:
die Tabelle eine Betriebsstarttemperaturdifferenz, die eine Differenz zwischen einer durch den ersten Temperatursensor (20) erfassten Betriebsstarttemperatur und einer durch den zweiten Temperatursensor erfassten Betriebsstarttemperatur ist, als den Temperaturindex mit einer geschätzten abgelaufenen Zeit bis zum Erreichen der Betriebsstarttemperaturdifferenz assoziiert, wobei angenommen wird, dass die Projektionsanzeigevorrichtung (100) den Betrieb bei der vorgegebenen Raumtemperatur beginnt.

5. Projektionsanzeigevorrichtung (100) nach einem der Ansprüche 1 bis 4, wobei:
das Projektionsbild kleiner als ein Projektionsbereich des durch die Bildprojektionseinheit (3) auf die Bildfläche (40) projizierten Lichts ist, und
die Positionseinstellungseinheit (350) die Anzeigeposition des Projektionsbilds durch das Einstellen einer Position des Projektionsbilds in dem Projektionsbereich einstellt.

6. Projektionsanzeigevorrichtung (100) nach einem der Ansprüche 1 bis 4, wobei:
die Bildprojektionseinheit eine bewegliche Projektionslinse enthält,
die Größe des Projektionsbilds gleich der Größe eines Projektionsbereichs des durch die Bildprojektionseinheit (3) auf die Bildfläche (40) projizierten Lichts ist, und
die Positionseinstellungseinheit (350) die Anzeigeposition des Projektionsbilds durch das Bewegen der Projektionslinse einstellt.

7. Projektionsanzeigevorrichtung (100) nach einem der vorstehenden Ansprüche, wobei:
das Projektionsbild, dessen Anzeigeposition eingestellt wird, ein Bild mit einem vorbestimmten Muster ist.

8. Projektionsanzeigevorrichtung (100) nach einem der vorstehenden Ansprüche, wobei:
die in der Bildverschiebungskorrekturgröße-Speichereinheit (32) gespeicherte Bildverschiebungskorrekturgröße durch eine Bildverschiebungskorrekturgröße in einer horizontalen Richtung und eine Bildverschiebungskorrekturgröße in einer vertikalen Richtung gebildet wird.

9. Ein Verfahren zum Korrigieren einer Anzeigeposition eines Projektionsbilds, wobei das Verfahren aufweist:
Timen einer Zeit bei oder nach einer Betriebsstartzeit, zu der die Projektionsanzeigevorrichtung (100) einen Betrieb beginnt, was durch eine Timingeinheit (34) durchgeführt wird, wenn die Projektionsanzeigevorrichtung (100) eingeschaltet wird und die Projektionsanzeigevorrichtung (100) den Betrieb beginnt,
Speichern, in einer Bildverschiebungskorrekturgröße-Speichereinheit (32), einer Vielzahl von abgelaufenen Zeiten bei oder nach der durch die Timingeinheit (34) getimten Betriebsstartzeit, wenn ein Benutzer eine Positionseinstellungseinheit (350), die eine Anzeigeposition eines auf einer Bildfläche (40) angezeigten Projektionsbilds einstellt, verwendet, um eine Bildverschiebungsgröße, mit der die Bildposition des auf der Bildfläche (40) angezeigten Projektionsbilds verschoben wird, einzustellen, in Assoziation mit Bildverschiebungskorrekturgrößen in Entsprechung zu den entsprechenden abgelaufenen Zeiten, die Einstellungsgrößen, mit denen die Bildverschiebungsgrößen des Projektionsbilds eingestellt werden, sind,
Erhalten einer Temperatur innerhalb oder außerhalb der Projektionsanzeigevorrichtung (100), die durch einen an einem Teil in der Projektionsanzeigevorrichtung (100) angebrachten Temperatursensor (20) erfasst wird, wenn die Projektionsanzeigevorrichtung (100) den Betrieb beginnt,
Bezugnehmen auf eine durch eine Tabellenspeichereinheit (31) gespeicherte Tabelle, die jeden Temperaturindex innerhalb einer Vielzahl von Temperaturindizes basierend auf der Temperatur, die durch den Temperatursensor (20) erfasst wird, wenn die Projektionsanzeigevorrichtung (100) den Betrieb beginnt, mit einer geschätzten abgelaufenen Zeit in Entsprechung zu jedem Temperaturindex bis zum Erreichen jedes Temperaturindex assoziiert, wobei angenommen wird, dass die Projektionsanzeigevorrichtung (100) einen Betrieb bei einer vorgegebenen Raumtemperatur beginnt, um eine mit dem erhaltenen Temperaturindex assoziierte geschätzte abgelaufene Zeit zu erhalten,
Erhalten einer korrigierten abgelaufenen Zeit durch das Addieren der erhaltenen geschätzten abgelaufenen Zeit zu einer tatsächlich abgelaufenen Zeit bei oder nach der durch die Timingeinheit (34) getimten Betriebsstartzeit,
Bestimmen, ob die korrigierte abgelaufene Zeit eine aus der in der Bildverschiebungskorrekturgröße-Speichereinheit (32) gespeicherten Vielzahl von abgelaufenen Zeiten erreicht hat, und
Einstellen der Anzeigeposition des auf der Bildfläche (40) angezeigten Projektionsbilds durch die Bildverschiebungskorrekturgröße in Entsprechung zu der korrigierten abgelaufenen Zeit, wenn bestimmt wird, dass die korrigierte abgelaufene Zeit eine aus der Vielzahl von abgelaufenen Zeiten erreicht hat.

## Revendications

1. Dispositif d'affichage par projection (100) comprenant :
une unité de projection d'images (3) configurée pour projeter la lumière de l'image obtenue en modulant la lumière d'éclairage en fonction des données de l'image sur un écran (40) sous forme d'une image projetée ;
une unité de réglage de position (350) configurée pour régler la position d'affichage de l'image projetée affichée sur l'écran (40) ;
une unité de chronométrage (34) configurée pour chronométrer un temps au moment du démarrage du fonctionnement ou après, lorsque l'alimentation du dispositif d'affichage par projection (100) est activée et que le dispositif d'affichage par projection (100) commence à fonctionner ;
un capteur de température (20) fixé à n'importe quelle partie du dispositif d'affichage par projection (100), configuré pour détecter une température à l'intérieur ou à l'extérieur du dispositif d'affichage par projection (100) ;
une unité de maintien de table (31) configurée pour contenir une table qui associe chaque indice de température parmi une pluralité d'indices de température basés sur la température détectée par le capteur de température (20) lorsque le dispositif d'affichage par projection (100) commence à fonctionner, avec un temps écoulé estimé correspondant à chaque indice de température jusqu'à ce que chaque indice de température soit atteint en supposant que le dispositif d'affichage par projection (100) commence à fonctionner à une température ambiante prédéfinie ;
une unité de stockage de correction de décalage d'image (32) configurée pour stocker une pluralité de temps écoulés au moment du démarrage du fonctionnement ou après, chronométré par l'unité de chronométrage (34) lorsqu'un utilisateur utilise l'unité de réglage de position (350) pour régler une quantité de décalage d'image dans lequel la position d'affichage de l'image projetée affichée sur l'écran (40) est décalée en association avec des quantités de correction de décalage d'image correspondant aux temps écoulés respectifs qui sont des quantités de réglage selon lesquelles les quantités de décalage d'image de l'image projetée sont réglées ; et
un contrôleur (30) configuré pour acquérir un indice de température sur la base de la température détectée par le capteur de température (20) lorsque l'alimentation du dispositif d'affichage par projection (100) est activée et que le dispositif d'affichage par projection (100) commence à fonctionner, configuré pour acquérir un temps écoulé estimé associé à l'indice de température acquis en se référant à la table, configuré pour obtenir un temps écoulé de correction en ajoutant le temps écoulé estimé acquis et un temps écoulé réel au moment du démarrage de du fonctionnement ou après, chronométré par l'unité de chronométrage (34), configuré pour déterminer si le temps écoulé de correction a atteint un quelconque parmi la pluralité de temps écoulés stockés dans l'unité de stockage de correction de décalage d'image (32) et configuré pour commander l'unité de réglage de position (350) pour régler la position d'affichage de l'image projetée affichée sur l'écran (40) par la quantité de correction du décalage d'image correspondant au temps écoulé de correction lorsqu'il est déterminé que le temps écoulé de correction a atteint un quelconque parmi la pluralité de temps écoulés.

2. Dispositif d'affichage par projection (100) selon la revendication 1, comprenant :
un premier capteur de température (20) configuré pour détecter la température de tout élément optique à l'intérieur du dispositif d'affichage par projection (100) en tant que capteur de température (20), dans lequel
la table associe une température de démarrage de fonctionnement détectée par le premier capteur de température (20) en tant qu'indice de température, à un temps écoulé estimé jusqu'à ce que la température de démarrage de fonctionnement soit atteinte, en supposant que le dispositif d'affichage par projection (100) commence à fonctionner à la température ambiante prédéfinie.

3. Dispositif d'affichage par projection (100) selon la revendication 1, comprenant :
une pluralité de capteurs de température en tant que capteur de température (20), dans lequel
la table associe une température moyenne de démarrage de fonctionnement détectée par la pluralité de capteurs de température en tant qu'indice de température, avec un temps écoulé estimé jusqu'à ce que la température moyenne soit atteinte en supposant que le dispositif d'affichage par projection (100) commence à fonctionner à la température ambiante prédéfinie.

4. Dispositif d'affichage par projection (100) selon la revendication 1, comprenant :
un premier capteur de température (20) configuré pour détecter la température de tout élément optique à l'intérieur du dispositif d'affichage par projection (100) en tant que capteur de température (20) ; et
un deuxième capteur de température configuré pour détecter la température d'un autre élément optique ou d'une autre pièce en tant que capteur de température (20), dans lequel
la table associe une différence de température de démarrage de fonctionnement, en tant qu'indice de température, qui est une différence entre une température de démarrage de fonctionnement détectée par le premier capteur de température (20) et une température de démarrage de fonctionnement détectée par le deuxième capteur de température, à un temps écoulé estimé jusqu'à ce que la différence de température de démarrage de fonctionnement soit atteinte en supposant que le dispositif d'affichage par projection (100) commence à fonctionner à la température ambiante prédéfinie.

5. Dispositif d'affichage par projection (100) selon l'une quelconque des revendications 1 à 4, dans lequel
l'image projetée est plus petite que la zone de projection de la lumière projetée sur l'écran (40) par l'unité de projection d'images (3), et
l'unité de réglage de position (350) règle la position d'affichage de l'image projetée en réglant une position de l'image projetée dans la plage de projection.

6. Dispositif d'affichage par projection (100) selon l'une quelconque des revendications 1 à 4, dans lequel
l'unité de projection d'images comporte une lentille de projection mobile,
la taille de l'image projetée est identique à la taille de la zone de projection de la lumière projetée sur l'écran (40) par l'unité de projection d'images (3), et
l'unité de réglage de position (350) règle la position d'affichage de l'image projetée en déplaçant la lentille de projection.

7. Dispositif d'affichage par projection (100) selon l'une quelconque des revendications précédentes, dans lequel
l'image projetée dont la position d'affichage est réglée est une image ayant un motif prédéterminé.

8. Dispositif d'affichage par projection (100) selon l'une quelconque des revendications précédentes, dans lequel
la quantité de correction de décalage d'image stockée dans l'unité de stockage de la quantité de correction de décalage d'image (32) est constituée d'une quantité de correction de décalage d'image dans une direction horizontale et d'une quantité de correction de décalage d'image dans une direction verticale.

9. Procédé de correction de la position d'affichage d'une image projetée, le procédé comprenant :
le chronométrage d'un temps au moment du démarrage d'un fonctionnement ou après lorsqu'un dispositif d'affichage par projection (1000) commence à fonctionner, effectué par une unité de chronométrage (34) lorsque l'alimentation du dispositif d'affichage par projection est activée et que le dispositif d'affichage par projection (100) commence à fonctionner ;
le stockage, dans une unité de stockage de correction de décalage d'image (32), d'une pluralité de temps écoulés au moment du démarrage du fonctionnement ou après, chronométré par l'unité de chronométrage (34) lorsqu'un utilisateur utilise une unité de réglage de position (350) qui règle la position d'affichage d'une image de projection affichée sur un écran (40) pour régler une quantité de décalage d'image selon laquelle la position d'affichage de l'image projetée affichée sur l'écran (40) est décalée, en association avec des quantités de correction de décalage d'image correspondant aux temps écoulés respectifs qui sont des quantités de réglage selon lesquelles les quantités de décalage d'image de l'image projetée est réglée ;
l'acquisition d'une température à l'intérieur ou à l'extérieur du dispositif d'affichage par projection (100), détectée par un capteur de température (20) fixé à une quelconque partie du dispositif d'affichage par projection (100) lorsque le dispositif d'affichage par projection (100) commence à fonctionner ;
la consultation d'une table conservée par une unité de conservation de table (31) qui associe chaque indice de température parmi une pluralité d'indices de température basés sur la température détectée par le capteur de température (20) lorsque le dispositif d'affichage par projection (100) commence à fonctionner, avec un temps écoulé estimé correspondant à chaque indice de température jusqu'à ce que chaque indice de température soit atteint en supposant que le dispositif d'affichage par projection (100) commence à fonctionner à une température ambiante prédéfinie, pour acquérir le temps écoulé estimé associé à l'indice de température acquis ;
l'obtention d'un temps écoulé de correction en ajoutant le temps écoulé estimé acquis et un temps écoulé réel au moment du démarrage du fonctionnement ou après, chronométré par l'unité de chronométrage (34) ;
la détermination de si le temps écoulé de correction a atteint un quelconque parmi la pluralité de temps écoulés stockés dans l'unité de stockage de correction de décalage d'image (32) ; et
le réglage de la position d'affichage de l'image projetée affichée à l'écran (40) par la quantité de correction du décalage d'image correspondant au temps écoulé de correction lorsqu'il est déterminé que le temps écoulé de correction a atteint un quelconque parmi la pluralité de temps écoulés.
